# EUROPÄISCHE PATENTANMELDUNG

(11) **EP 4 230 333 A1**
(43) Veröffentlichungstag der Anmeldung: **23.08.2023**
(21) Anmeldenummer: 23154683.9
(22) Anmeldetag: 02.02.2023
(51) Int. Cl.: B23D 47/02, B25H 3/00, B25H 3/02

(54) **SÄGEVORRICHTUNG, STAPELANORDNUNG, ABDECKANORDNUNG, TRANSPORTANORDNUNG UND VERFAHREN**

(30) Priorität: 03.02.2022 DE 102022201168
(71) Anmelder: Festool GmbH, 73240 Wendlingen am Neckar (DE)
(72) Erfinder: Eisenmann, Philipp, 73266 Bissingen (DE); Rapp, Sibylle, 73054 Eislingen (DE)
(74) Vertreter: Patentanwälte Magenbauer & Kollegen Partnerschaft mbB

(57) **Zusammenfassung**

Die Erfindung betrifft eine Sägevorrichtung (10), insbesondere eine Tischkreissäge oder eine Kappsäge, umfassend eine Sägeeinheit (20) mit einem Sägeblatt (1) und einer Stützstruktur (2), die mit ihrer Unterseite (3) auf einer Unterlage abstellbar ist und über eine Werkstück-Auflage (4) verfügt, auf der ein Werkstück (6) auflegbar ist, während es mit der Sägevorrichtung (10) gesägt wird, wobei die Sägevorrichtung (10) über eine Kopplungsschnittstelle (5) verfügt, über die eine lösbare, vertikal zugfeste Kopplung mit wenigstens einer Systemkiste (30) herstellbar ist, um zusammen mit der wenigstens einen Systemkiste (30) einen vertikalen Stapel zu bilden, derart, dass die Sägevorrichtung (10) in dem vertikalen Stapel eine Transportausrichtung einnimmt, in der die Werkstück-Auflage (4) mit ihrer Auflageebene vertikal ausgerichtet ist.

## Beschreibung

Die Erfindung betrifft eine Sägevorrichtung, insbesondere eine Tischkreissäge oder eine Kappsäge, umfassend eine Sägeeinheit mit einem Sägeblatt und einer Stützstruktur, die mit ihrer Unterseite auf einer Unterlage abstellbar ist und über eine Werkstück-Auflage verfügt, auf der ein Werkstück auflegbar ist, während es mit der Sägevorrichtung gesägt wird, wobei die Sägevorrichtung über eine Kopplungsschnittstelle verfügt, über die eine lösbare, vertikal zugfeste Kopplung mit wenigstens einer Systemkiste herstellbar ist, um zusammen mit der wenigstens einen Systemkiste einen vertikalen Stapel zu bilden.

Die Systemkiste ist beispielsweise eine Transportkiste. Zweckmäßigerweise verfügt die Systemkiste über eine Systemkiste-Kopplungsschnittstelle, mit der die Systemkiste an wenigstens eine weitere Systemkiste gekoppelt werden kann, um mit der weiteren Systemkiste einen vertikalen Stapel zu bilden. Eine vertikal zugfeste Kopplung ist insbesondere eine Kopplung, die eine vertikale Zugkraft überträgt.

Die US8602378B2 beschreibt einen zu einer Sackkarre zusammenklappbaren Ständer mit einer tragbaren Tischkreissäge, die an der Auflagefläche des Ständers befestigt ist.

Die WO2018065042A1 beschreibt eine transportable Kreissäge in Gestalt einer Systemkiste, die in einen Stapel von Systemkisten integriert und mit diesen zusammen transportiert werden kann. Hierbei kann die transportable Kreissäge in Arbeitsorientierung, d.h. mit ihrem horizontal ausgerichteten Arbeitstisch in einen Stapel von Systemkisten integriert werden.

Eine Aufgabe der Erfindung besteht darin, eine einfach transportierbare und flexibel einsetzbare Sägevorrichtung bereitzustellen.

Die Aufgabe wird gelöst durch eine Sägevorrichtung nach Anspruch 1. Die Sägevorrichtung verfügt über die Kopplungsschnittstelle, über die die lösbare, vertikal zugfeste Kopplung mit der wenigstens einen Systemkiste herstellbar ist, um zusammen mit der wenigstens einen Systemkiste den vertikalen Stapel zu bilden, derart, dass die Sägevorrichtung in dem vertikalen Stapel eine Transportausrichtung einnimmt, in der die Werkstück-Auflage mit ihrer Auflageebene vertikal ausgerichtet ist.

Die horizontalen Abmessungen einer Systemkiste sind fest vorgegeben, damit die Systemkiste kompatibel zu anderen Systemkisten des gleichen Systems ist. Um die Sägevorrichtung derart auszugestalten, dass sie an eine Systemkiste ankoppelbar ist, muss die Sägevorrichtung gemäß den horizontalen Abmessungen - also dem Grundriss - der Systemkiste dimensioniert sein. Konventionell ist eine Sägevorrichtung derart ausgeführt, dass sie in Arbeitsausrichtung - also mit einer horizontal ausgerichteten Werkstück-Auflage - in dem vertikalen Stapel untergebracht werden kann. In diesem Fall ist die Größe der Werkstück-Auflage durch die horizontalen Abmessungen der Systemkiste begrenzt.

Erfindungsgemäß kann die Sägevorrichtung in der Transportausrichtung - also mit einer vertikal ausgerichteten Werkstück-Auflage - in dem vertikalen Stapel untergebracht werden. Dadurch ist die Länge der Werkstück-Auflage nicht mehr durch die horizontalen Abmessungen der Systemkiste begrenzt. Es wird möglich, eine Sägevorrichtung mit einer Werkstück-Auflage bereitzustellen, die länger ist als die horizontalen Abmessungen der Systemkiste, aber trotzdem an die Systemkiste ankoppelbar ist, um einen vertikalen Stapel zu bilden. Durch die vergrößerte Werkstück-Auflage ist die Sägevorrichtung flexibler einsetzbar; gleichzeitig kann die Sägevorrichtung weiterhin in einem Stapel von Systemkisten untergebracht werden und ist daher einfach transportierbar.

Vorteilhafte Weiterbildungen sind Gegenstand der Unteransprüche.

Die Erfindung betrifft ferner eine Stapelanordnung, umfassend die Sägevorrichtung, sowie eine untere Systemkiste und/oder eine obere Systemkiste, wobei die Sägevorrichtung auf die untere Systemkiste aufgesetzt ist und/oder die obere Systemkiste auf die Sägevorrichtung aufgesetzt ist, so dass die Sägevorrichtung, die untere Systemkiste und/oder die obere Systemkiste zusammen einen vertikalen Stapel bilden, und wobei die Kopplungsschnittstelle eine untere Kopplungsschnittstelle umfasst, die eine untere lösbare, vertikal zugfeste Kopplung zu der unteren Systemkiste bereitstellt, und/oder eine obere Kopplungsschnittstelle umfasst, die eine obere lösbare, vertikal zugfeste Kopplung zu der oberen Systemkiste bereitstellt, wobei die Sägevorrichtung in dem vertikalen Stapel die Transportausrichtung einnimmt, in der die Werkstück-Auflage mit ihrer Auflageebene vertikal ausgerichtet ist.

Die Erfindung betrifft ferner ein Verfahren zum Betreiben der Sägevorrichtung, umfassend den Schritt: Herstellen der lösbaren, vertikal zugfesten Kopplung zwischen der Sägevorrichtung und der wenigstens einen Systemkiste, so dass die Sägevorrichtung und die wenigstens eine Systemkiste den vertikalen Stapel bilden, derart, dass die Sägevorrichtung in dem vertikalen Stapel eine Transportausrichtung einnimmt, in der die Werkstück-Auflage mit ihrer Auflageebene vertikal ausgerichtet ist.

Die Erfindung betrifft ferner eine Abdeckanordnung mit einer als Schutzhaube ausgeführten Abdeckstruktur zur Aufnahme eines Elektrowerkzeugs, insbesondere einer Tischkreissäge oder einer Kappsäge, wobei die Schutzhaube eine Kopplungsschnittstelle aufweist, mit der eine lösbare, vertikal zugfeste Kopplung zu einer oder mehreren Systemkisten herstellbar ist, so dass die Abdeckanordnung in einer Transportkonfiguration, in der die Schutzhaube das Elektro-Werkzeug aufnimmt, zusammen mit der einen oder den mehreren Systemkisten einen vertikalen Stapel bilden kann.

Die Erfindung betrifft ferner eine Transportanordnung, umfassend die Abdeckanordnung sowie das in der Schutzhaube aufgenommene Elektrowerkzeug, wobei die Transportanordnung über Kopplungsabschnitte zur Herstellung der lösbaren, vertikal zugfesten Kopplung, insbesondere einer/der unteren lösbaren, vertikal zugfesten Kopplung und/oder einer/der oberen lösbaren, vertikal zugfesten Kopplung verfügt, die Teil der Kopplungsschnittstelle sind, wobei sämtliche Kopplungsabschnitte Teil der Schutzhaube und nicht Teil des Elektrowerkzeugs sind.

Die Erfindung betrifft ferner eine Stapelanordnung, umfassend die Transportanordnung sowie eine untere Systemkiste und eine obere Systemkiste, wobei die Transportanordnung auf die untere Systemkiste aufgesetzt ist und die obere Systemkiste auf die Transportanordnung aufgesetzt ist, so dass die Transportanordnung, die untere Systemkiste und die obere Systemkiste zusammen einen vertikalen Stapel bilden, und wobei die Kopplungsschnittstelle eine untere Kopplungsschnittstelle umfasst, die eine untere lösbare, vertikal zugfeste Kopplung zu der unteren Systemkiste bereitstellt, und eine obere Kopplungsschnittstelle umfasst, die eine obere lösbare, vertikal zugfeste Kopplung zu der oberen Systemkiste bereitstellt.

Die Erfindung betrifft ferner ein Verfahren zum Betreiben der Abdeckanordnung oder der Transportanordnung, umfassend den Schritt: Herstellen der lösbaren, vertikal zugfesten Kopplung der Schutzhaube mit der wenigstens einen Systemkiste, um den vertikalen Stapel zu bilden.

Weitere exemplarische Details sowie beispielhafte Ausführungsformen werden nachstehend unter Bezugnahme auf die Figuren erläutert. Dabei zeigt
- Figur 1: eine perspektivische Darstellung einer Sägevorrichtung,
- Figur 2: eine schematische Darstellung der Sägevorrichtung in einer Transportkonfiguration,
- Figur 3: eine perspektivische Darstellung einer Stapelanordnung,
- Figur 4: eine Schnittansicht einer oberen Kopplungsvertiefung einer Kopplungsschnittstelle,
- Figur 5: eine Schnittansicht eines Drehriegels der Kopplungsschnittstelle,
- Figur 6: eine Schnittansicht eines unteren Kopplungsvorsprungs der Kopplungsschnittstelle,
- Figur 7: eine Schnittansicht eines vorderen Kopplungsvorsprungs der Kopplungsschnittstelle,
- Figur 8: die Sägevorrichtung in einer Arbeitskonfiguration,
- Figur 9: eine mehrteilige Abdeckstruktur,
- Figur 10: eine Schnittansicht einer inneren Kopplungsstruktur einer Abdeckstruktur,
- Figur 11: eine Abdeckanordnung mit einer Abdeckstruktur und einem an die Abdeckstruktur anbringbaren Bodenelement.

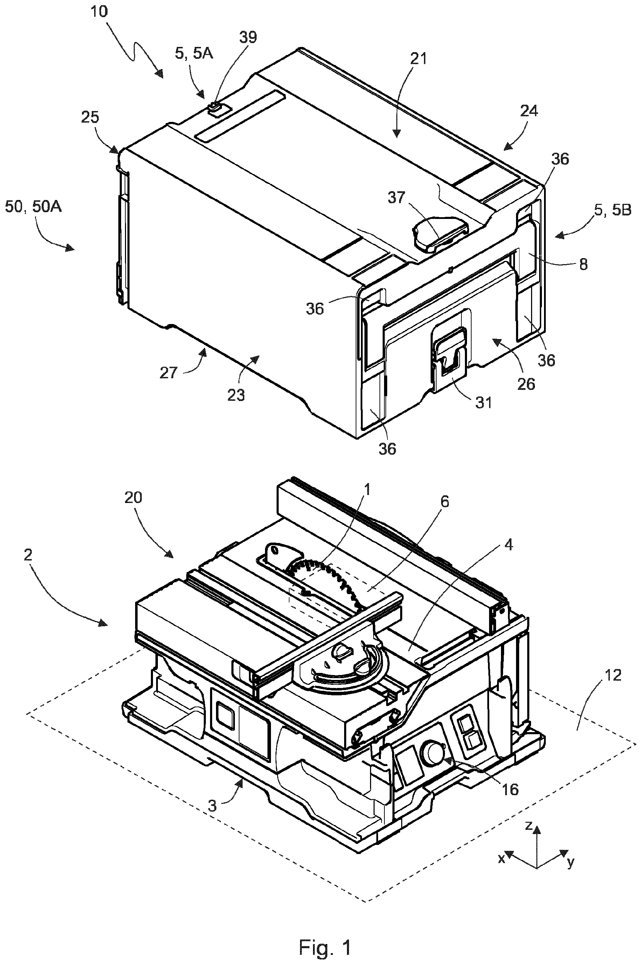

Die Figur 1 zeigt eine Sägevorrichtung 10, die exemplarisch als Tischkreissäge ausgeführt ist. Die Sägevorrichtung 10 kann auch als Kappsäge ausgeführt sein.

Die Sägevorrichtung 10 ist vorzugsweise eine halbstationäre Maschine. Eine halbstationäre Maschine ist eine Maschine, die für die Bearbeitung eines Werkstücks stationär auf einer Unterlage abzustellen ist und/oder von einem einzelnen Anwender getragen werden kann. Exemplarisch muss die Sägevorrichtung 10 zum Sägen eines Werkstücks 6 stationär auf einer Unterlage 12 abgestellt werden und/oder kann von einem einzelnen Anwender getragen werden. Beispielsweise wiegt die Sägevorrichtung weniger als 30 kg und/oder hat (in einer Transportkonfiguration und einer Transportausrichtung) einen Grundriss von weniger als 50 cm x 50 cm.

Die Sägevorrichtung 10 umfasst exemplarisch eine Sägeeinheit 20 und eine Abdeckstruktur 50. Zweckmäßigerweise stellt die Sägeeinheit 20 bereits für sich genommen eine Tischkreissäge dar. Die Sägeeinheit 20 kann auch als Kappsäge ausgeführt sein. Die Abdeckstruktur 50 ist exemplarisch als Abdeckhaube, insbesondere als Schutzhaube, für die Sägeeinheit 20 ausgeführt.

Nachstehend wird Bezug genommen auf die in den Figuren eingezeichnete x-Richtung, y-Richtung und z-Richtung, die orthogonal zueinander ausgerichtet sind. Die x-Richtung, y-Richtung und z-Richtung beziehen sich auf die Sägevorrichtung 10 und werden daher bei einer Rotation der Sägevorrichtung 10 entsprechend mitrotiert.

Die x-Richtung kann auch als Längsrichtung bezeichnet werden. Exemplarisch ist die x-Richtung die Vorschubrichtung, in der ein Werkstück 6 auf ein Sägeblatt 1 der Sägevorrichtung 10 geschoben wird, um das Werkstück 6 mit dem Sägeblatt 1 zu sägen. Die y-Richtung kann auch als Querrichtung bezeichnet werden. Die y-Richtung ist senkrecht zur Sägeblatt-Ebene des Sägeblatts 1 ausgerichtet. Die z-Richtung ist senkrecht zur einer Auflageebene einer Werkstück-Auflage 4 der Sägevorrichtung 10 ausgerichtet.

Vorzugsweise kann die Sägevorrichtung 10 wahlweise in eine Arbeitskonfiguration oder eine Transportkonfiguration versetzt werden.

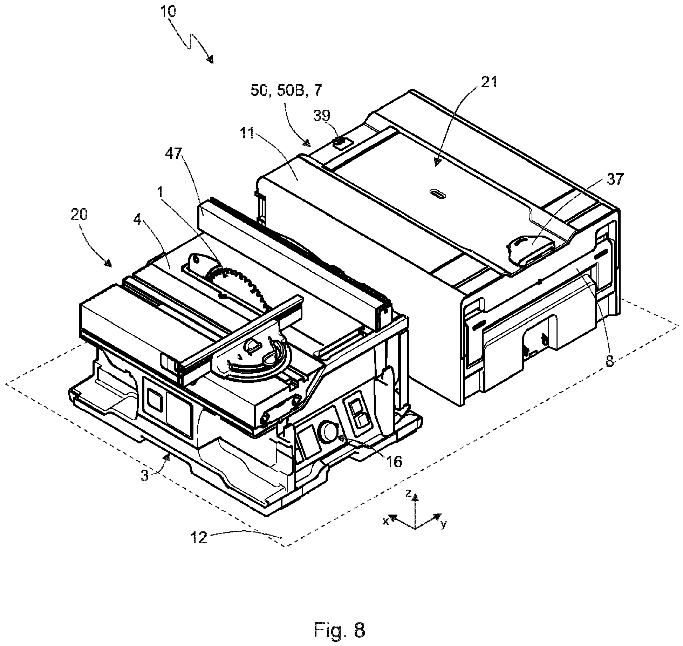

Die Arbeitskonfiguration ist z.B. in der Figur 1 und der Figur 8 gezeigt. In der Arbeitskonfiguration kann die Sägeeinheit 20 zum Sägen des Werkstücks 6 verwendet werden. In der Arbeitskonfiguration verdeckt die Abdeckstruktur 50 nicht die Werkstück-Auflage 4 und/oder verdeckt nicht das Sägeblatt 1. Beispielsweise ist die Abdeckstruktur 50 in der Arbeitskonfiguration von der Sägeeinheit 20 abgenommen. Bevorzugt steht die Abdeckstruktur 50 in der Arbeitskonfiguration neben der Sägeeinheit 20, wie dies exemplarisch in der Figur 8 gezeigt ist. Die Sägevorrichtung 10, insbesondere die Sägeeinheit 20, ist in eine Arbeitsausrichtung versetzbar. In der Arbeitsausrichtung sind die x-Richtung und die y-Richtung horizontal ausgerichtet und die z-Richtung ist vertikal ausgerichtet.

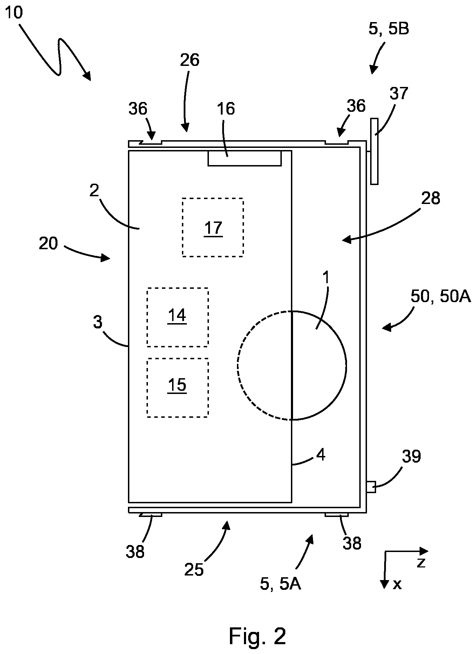

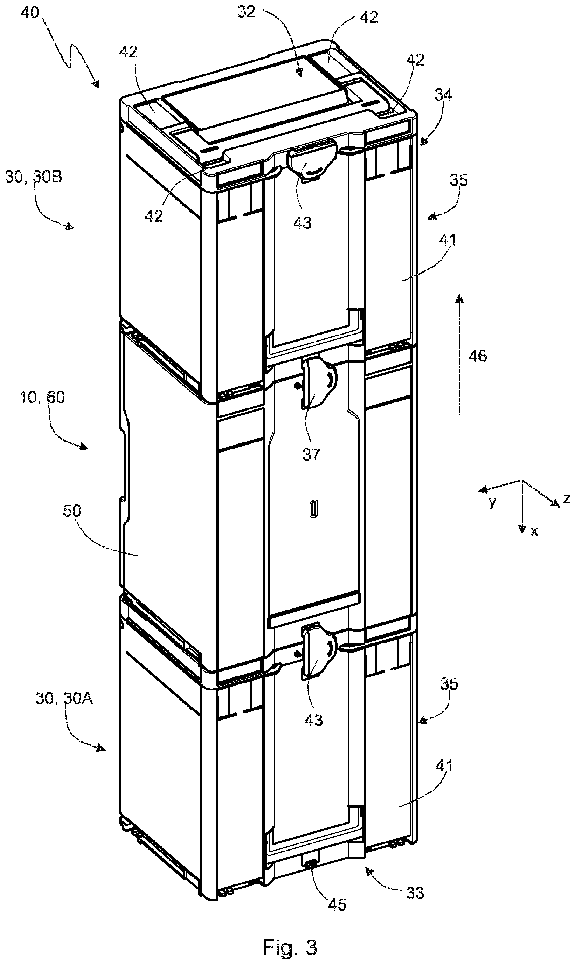

Die Transportkonfiguration ist z.B. in den Figuren 2 und 3 gezeigt. In der Transportkonfiguration kann die Sägevorrichtung 10 in einen Stapel von Systemkisten 30 untergebracht werden (oder ist in einem solchen Stapel untergebracht). In der Transportkonfiguration verdeckt die Abdeckstruktur 50 die Werkstück-Auflage 4 und/oder das Sägeblatt 1. Insbesondere ist die Abdeckstruktur 50 in der Transportkonfiguration an der Sägeeinheit 20 angebracht, exemplarisch auf dieser aufgesetzt. Beispielsweise nimmt die Abdeckstruktur 50 die Sägeeinheit 20 in der Transportkonfiguration auf. Die Sägevorrichtung 10, insbesondere die Sägeeinheit 20, ist in eine Transportausrichtung versetzbar. In der Transportausrichtung sind die y-Richtung und die z-Richtung horizontal ausgerichtet und die x-Richtung ist vertikal ausgerichtet. In der Transportausrichtung ist die Sägevorrichtung 10 gegenüber der Arbeitsausrichtung rotiert, und zwar um 90 Grad um eine horizontale Achse, insbesondere eine in y-Richtung verlaufende horizontale Achse. Zweckmäßigerweise ist in der Transportkonfiguration das Sägeblatt 1 betriebsbereit an der Stützstruktur 2 befestigt und ragt aus der Werkstück-Auflage 4 heraus.

Exemplarisch ist die Sägevorrichtung 10 kistenförmig, insbesondere quaderförmig, ausgeführt, insbesondere in der Transportkonfiguration. Vorzugsweise hat die Sägevorrichtung 10 in der Transportkonfiguration die äußere Form einer Systemkiste.

Die Sägeeinheit 20 umfasst das Sägeblatt 1, das exemplarisch als Kreissägeblatt ausgeführt ist.

Die Sägeeinheit 20 umfasst ferner eine Stützstruktur 2, die exemplarisch mit ihrer Unterseite 3 auf der Unterlage 12 abstellbar ist. Die Unterlage 12 ist beispielsweise eine Arbeitsfläche, insbesondere die Oberseite eines Arbeitstischs oder einer Werkbank. Die Stützstruktur 2 hat exemplarisch eine quaderförmige Grundgestalt. Die Stützstruktur 2 stellt insbesondere das Außengehäuse der Sägeeinheit 20 bereit.

Die Sägeeinheit 20 verfügt über eine Werkstück-Auflage 4, auf der das Werkstück 6 auflegbar ist, insbesondere während es mit der Sägevorrichtung 10 gesägt wird. Exemplarisch ist die Werkstück-Auflage 4 die Oberseite der Stützstruktur 2. Insbesondere ist die Werkstück-Auflage 4 eine Werkstück-Auflagefläche. Das Sägeblatt 1 ragt in z-Richtung aus der Werkstück-Auflage 4 heraus und/oder kann (in negativer z-Richtung) in diese hineinragen. In der Arbeitsausrichtung ist die Auflageebene der Werkstück-Auflage 4 horizontal ausgerichtet - also senkrecht zur einer vertikalen Richtung - und in der Transportausrichtung ist die Auflageebene der Werkstück-Auflage vertikal ausgerichtet - also senkrecht zu einer horizontalen Richtung. Die Auflageebene ist eine x-y-Ebene.

Die Sägeeinheit 20 verfügt über eine Antriebseinheit 14 zum Antrieb des Sägeblatts 1. Die Antriebseinheit 14 umfasst beispielsweise einen Elektromotor. Die Antriebseinheit 14 ist exemplarisch in oder an der Stützstruktur 2 angeordnet. Exemplarisch kann die Antriebseinheit 14 unterhalb oder oberhalb der Werkstück-Auflage 4 angeordnet sein.

Optional verfügt die Sägeeinheit 20 ferner über eine Verstelleinheit 15 zum Verstellen einer Ausrichtung und/oder Höhe des Sägeblatts 1 relativ zur Werkstück-Auflage 4. Die Verstelleinheit 15 umfasst zweckmäßigerweise einen oder zwei Elektromotoren.

Vorzugsweise umfasst die Sägeeinheit 20 eine Bedieneinrichtung 16, über die ein Anwender den Antrieb des Sägeblatts 1 steuern kann und/oder die Höhe und/oder Ausrichtung des Sägeblatts 1 einstellen kann. Die Bedieneinrichtung 16 ist exemplarisch an einer Umfangsseite der Sägeeinheit 20 angeordnet.

Vorzugsweise umfasst die Sägeeinheit 20 eine Steuereinheit 17. Die Steuereinheit 17 ist insbesondere ausgebildet, die Antriebseinheit 14 und/oder die Verstelleinheit 15 anzusteuern, beispielsweise gemäß einer Eingabe eines Anwenders in die Bedieneinrichtung 16. Vorzugsweise umfasst die Steuereinheit 17 einen Mikrocontroller.

Die Abdeckstruktur 50 ist exemplarisch quaderförmig ausgeführt. Die Abdeckstruktur 50 umfasst exemplarisch eine (normal zur positiven z-Richtung ausgerichtete) Abdeckstruktur-Oberseite 21, eine (normal zur negativen y-Richtung ausgerichtete) erste Abdeckstruktur-Längsseite 23, eine (normal zur positiven y-Richtung ausgerichtete) zweite Abdeckstruktur-Längsseite 24, eine (normal zur positiven x-Richtung ausgerichtete) erste Abdeckstruktur-Querseite 25 und eine (normal zur negativen x-Richtung ausgerichtete) zweite Abdeckstruktur-Querseite 26. Die Seiten 21, 23, 24, 25 und 26 sind zweckmäßigerweise geschlossene Seiten. Die Seiten 23, 24, 25, 26 sollen auch als Umfangsseiten bezeichnet werden.

Exemplarisch verfügt die Abdeckstruktur 50 über eine offene Abdeckstruktur-Unterseite 27, über die die Sägeeinheit 20 in die Abdeckstrukur 50 aufgenommen werden kann. Insbesondere kann die Abdeckstruktur 50 mit der offenen Abdeckstruktur-Unterseite 27 voran über die Sägeeinheit 20 gestülpt werden, insbesondere in negativer z-Richtung, um die Sägevorrichtung 10 in die Transportkonfiguration zu versetzen. Die Abdeckstruktur 50 mit der offenen Abdeckstruktur-Unterseite 27 ist exemplarisch als Schutzhaube ausgeführt, und soll insbesondere als Abdeckstruktur 50A gemäß einer ersten Variante bezeichnet werden.

Zweckmäßigerweise deckt die Abdeckstruktur 50 in der Transportkonfiguration die Bedieneinrichtung 16 ab. Beispielsweise verfügt die Abdeckstruktur 50 über eine Umfangsseite, beispielsweise die zweite Abdeckstruktur-Querseite 26, die in der Transportkonfiguration die Bedieneinrichtung 16 abdeckt.

Vorzugsweise decken in der Transportkonfiguration die Umfangsseiten - also insbesondere die Seiten 23, 24, 25, 26 - der Abdeckstruktur 50 die Umfangsseiten (also insbesondere die von der Werkstück-Auflage 4 und der Unterseite 3 verschiedenen Seiten) der Sägeeinheit 20 ab, insbesondere vollständig.

Bevorzugt definiert die Abdeckstruktur 50 in der Transportkonfiguration einen gegenüber der Umgebung der Sägevorrichtung 10 insbesondere staubdicht verschlossenen Innenraum 28. In dem Innenraum 28 sind zweckmäßigerweise das Sägeblatt 1 und/oder die Werkstück-Auflage 4 angeordnet. Insbesondere werden die Werkstück-Auflage 4 und das Sägeblatt 1 beim Transport durch die Abdeckstruktur 50 geschützt. Zweckmäßigerweise wird die Sägevorrichtung 10 so in der Abdeckstruktur 50 aufgenommen, dass (in der Transportkonfiguration) in der Sägevorrichtung 10 oder auf der Werkstück-Auflage 4 befindlicher Schmutz in der Sägevorrichtung 10 oder in dem Innenraum 28 verbleibt.

Bevorzugt weist die Sägevorrichtung 10 in der Transportkonfiguration ein insbesondere quaderförmiges Außengehäuse auf. Das Außengehäuse wird exemplarisch teilweise von der Abdeckstruktur 50 gebildet. Exemplarisch wird in der Transportkonfiguration eine Seite des Außengehäuses von der Unterseite 3 der Stützstruktur 2 gebildet und sämtliche weitere Seiten des Außengehäuses werden von der Abdeckstruktur 50 - insbesondere von den Seiten 21, 23, 24, 25 und 26 der Abdeckstruktur 50 - gebildet. Zweckmäßigerweise ist die Unterseite 3 die Aufstandsfläche der Sägevorrichtung 10. Vorzugsweise bildet die Aufstandsfläche der Sägevorrichtung 10 die Unterseite oder Bodenplatte der in der Transportkonfiguration kistenförmigen Sägevorrichtung 10. In der Transportkonfiguration ist die haubenförmige Abdeckstruktur 50 über die Sägeeinheit 20 gestülpt, insbesondere um diese zu schützen, und beispielsweise an der Bodenplatte befestigt.

Bei einer alternativen Ausgestaltung der Abdeckstruktur wird in der Transportkonfiguration das Außengehäuse der Sägevorrichtung 10 vollständig von der Abdeckstruktur 50 gebildet.

Exemplarisch verfügt die Abdeckstruktur 50 über ein oder mehrere Abdeckstruktur-Befestigungselemente 31, um die Abdeckstruktur 50 an der Sägeeinheit 20 zu befestigen, insbesondere in einem Zustand, in dem die Abdeckstruktur 50 über die Sägeeinheit 20 gestülpt ist. Beispielsweise umfasst die Abdeckstruktur 50 als Abdeckstruktur-Befestigungselement 31 einen Befestigungsriegel, der exemplarisch an einer Umfangsseite, insbesondere der zweiten Abdeckstruktur-Querseite 26, angeordnet ist, vorzugsweise außen.

Die Abdeckstruktur 50 umfasst exemplarisch einen Tragegriff 8, mit dem die Sägevorrichtung in der Transportkonfiguration getragen werden kann. Der Tragegriff 8 ist vorzugsweise an der zweiten Abdeckstruktur-Querseite 26 angeordnet, insbesondere außen. Der Tragegriff 8 ist exemplarisch bügelförmig ausgeführt. Zweckmäßigerweise ist der Tragegriff 8 klappbar ausgeführt und kann wahlweise in eine eingeklappte Stellung oder eine ausgeklappte Stellung versetzt werden.

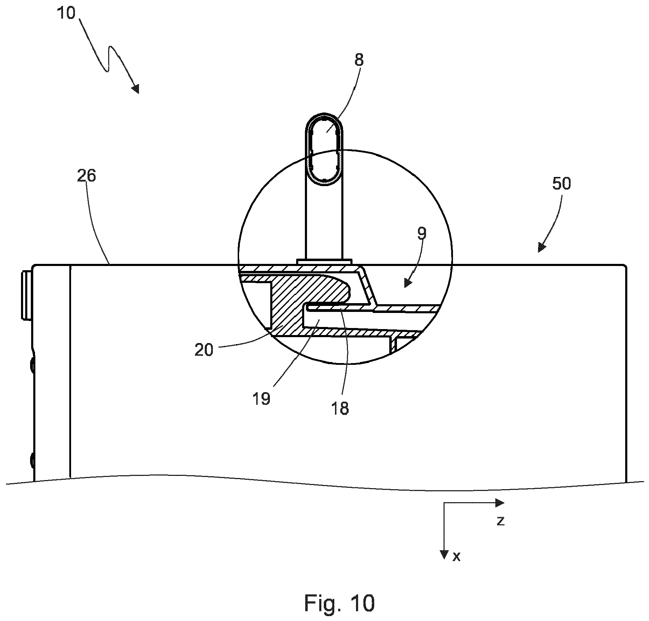

Die Abdeckstruktur 50 weist exemplarisch eine innere Kopplungsstruktur 9 auf, über die die Sägeeinheit 20 an der Abdeckstruktur 50 aufgehängt ist, wenn sich die Sägevorrichtung 10 (in der Transportkonfiguration) in der Transportausrichtung befindet. Eine exemplarische Ausgestaltung der inneren Kopplungsstruktur 9 ist in der Figur 10 gezeigt. Die innere Kopplungsstruktur 9 umfasst insbesondere eine Hakenstruktur 18, die in eine Kopplungsaussparung 19 der Sägeeinheit 20 greift. Exemplarisch ist die innere Kopplungsstruktur 9 innen an der zweiten Abdeckstruktur-Querseite 26 angeordnet. Der Tragegriff 8 ist vorzugsweise im Bereich der inneren Kopplungsstruktur 9 außen an der Abdeckstruktur 50 angeordnet. Insbesondere ist der Tragegriff 8 außen an der zweiten Abdeckstruktur-Querseite 26 angeordnet, vorzugsweise (in der Transportausrichtung) im gleichen horizontalen Bereich wie die innere Kopplungsstruktur. Exemplarisch ist der Tragegriff 8 derart angeordnet, dass eine durch den Tragegriff 8 in x-Richtung verlaufende gedachte Gerade durch die innere Kopplungsstruktur 9, insbesondere durch die Hakenstruktur 18 verläuft. Insbesondere ist der Tragegriff 8 derart angeordnet, dass in einem Zustand, in dem die Sägevorrichtung 10 mit dem Tragegriff 8 getragen wird, die Gewichtskraft der Sägeeinheit 20 direkt über die innere Kopplungsstruktur 9 in Richtung nach oben in den Tragegriff 8 abgeleitet wird.

Die Sägevorrichtung 10 verfügt über eine Kopplungsschnittstelle 5. Über die Kopplungsschnittstelle 5 kann die Sägevorrichtung 10 an eine Systemkiste 30 gekoppelt werden. Insbesondere ist über die Kopplungsschnittstelle 5 eine lösbare, vertikal zugfeste Kopplung zwischen der Sägevorrichtung 10 und wenigstens einer Systemkiste 30 herstellbar, um mit der wenigstens einen Systemkiste 30 einen vertikalen Stapel zu bilden, derart, dass die Sägevorrichtung 10 in dem vertikalen Stapel die Transportausrichtung einnimmt, in der die Werkstück-Auflage 4 mit ihrer Auflageebene vertikal ausgerichtet ist.

In der Transportausrichtung ist die Werkstück-Auflage 4 mit ihrer Auflageebene senkrecht zu einer Systemkiste-Oberseite 32 und/oder einer Systemkiste-Unterseite 33 einer in dem vertikalen Stapel angeordneten Systemkiste 30 ausgerichtet.

Die vertikal zugfeste Kopplung ist eine in vertikaler Richtung kraftübertragende Kopplung. Insbesondere ist die vertikal zugfeste Kopplung eine Kopplung, die eine vertikale Zugkraft überträgt. Beispielsweise ist die vertikal zugfeste Kopplung eine Kopplung, die als Festlager fungiert und/oder Kräfte in sämtlichen Raumrichtungen überträgt. In einem Fall, in dem die Sägevorrichtung 10 auf die Systemkiste 30 aufgesetzt ist, bewirkt die vertikal zugfeste Kopplung, dass durch ein Anheben der Sägevorrichtung 10 die Systemkiste 30 mitangehoben wird. In einem Fall, in dem die Systemkiste 30 auf die Sägevorrichtung 10 aufgesetzt und mit dieser vertikal zugfest gekoppelt ist, bewirkt die vertikal zugfeste Kopplung, dass durch ein Anheben der Systemkiste 30 die Sägevorrichtung 10 mitangehoben wird.

Die lösbare, vertikal zugfeste Kopplung ist insbesondere eine werkzeuglos lösbare Kopplung.

Die Systemkiste 30 ist insbesondere eine Transportkiste. Die Systemkiste 30 verfügt über eine Systemkiste-Kopplungsschnittstelle, mit der die Systemkiste mit einer kompatiblen Systemkiste - also insbesondere einer weiteren Systemkiste des gleichen Systems - lösbar vertikal zugfest koppelbar ist, um einen vertikalen Stapel zu bilden. Die Systemkiste 30 ist quaderförmig. Die Systemkiste 30 umfasst exemplarisch ein (exemplarisch quaderförmiges) Systemkiste-Unterteil 35 und einen an dem Systemkiste-Unterteil 35 angebrachten, insbesondere auf dieses aufgesetzten, Systemkiste-Deckel 34. Die Oberseite des Systemkiste-Deckels 34 ist die Systemkiste-Oberseite 32. Die Unterseite des Systemkiste-Unterteils 35 ist die Systemkiste-Unterseite 33.

Bevorzugt umfasst die Abdeckstruktur 50 die Kopplungsschnittstelle 5. Insbesondere ist die Kopplungsschnittstelle 5 Teil der Abdeckstruktur 50. Die Abdeckstruktur 50 ist zweckmäßigerweise an die Sägeeinheit 20 anbringbar, um die Sägevorrichtung 10 in die Transportkonfiguration zu versetzen. In der Transportkonfiguration ist die Sägevorrichtung 10 mit der Kopplungsschnittstelle 5 an die wenigstens eine Systemkiste 30 koppelbar, um zusammen mit der wenigstens einen Systemkiste 30 den Stapel zu bilden.

Die Kopplungsschnittstelle 5 umfasst exemplarisch eine untere Kopplungsschnittstelle 5A und/oder eine obere Kopplungsschnittstelle 5B. Bevorzugt besteht die Kopplungsschnittstelle 5 aus der unteren Kopplungsschnittstelle 5A und der oberen Kopplungsschnittstelle 5B. Mit der unteren Kopplungsschnittstelle 5A ist die Sägevorrichtung 10 lösbar, vertikal zugfest an eine untere Systemkiste 30A ankoppelbar, auf die die Sägevorrichtung 10 aufgesetzt ist. Mit der oberen Kopplungsschnittstelle 5B ist die Sägevorrichtung 10 lösbar, vertikal zugfest an eine auf die Sägevorrichtung 10 aufgesetzte obere Systemkiste 30B ankoppelbar.

Die untere Kopplungsschnittstelle 5A ist an der ersten Abdeckstruktur-Querseite 25 angeordnet, insbesondere teilweise oder vollständig. Die obere Kopplungsschnittstelle 5B ist an der zweiten Abdeckstruktur-Querseite 26 angeordnet, insbesondere teilweise oder vollständig.

Die Kopplungsschnittstelle 5 umfasst zweckmäßigerweise mehrere Kopplungsabschnitte. Die Kopplungsabschnitte umfassen zweckmäßigerweise einen oder mehrere feststehende Kopplungsabschnitte, beispielsweise eine oder mehrere Kopplungsvertiefungen und/oder eine oder mehrere Kopplungsvorsprünge. Zweckmäßigerweise umfasst die Kopplungsschnittstelle 5 ferner wenigstens einen (exemplarisch genau einen) beweglich gelagerten Kopplungsabschnitt, beispielsweise einen Kopplungsriegel. Der Kopplungsriegel ist insbesondere als Drehriegel, exemplarisch als T-förmiger Drehriegel, ausgeführt.

Die obere Kopplungsschnittstelle 5A umfasst exemplarisch mehrere obere Kopplungsabschnitte, die insbesondere an der zweiten Abdeckstruktur-Querseite 26 und/oder der Abdeckstruktur-Oberseite 21 angeordnet sind. Exemplarisch umfassen die oberen Kopplungsabschnitte Kopplungsvertiefungen 36, die insbesondere an der zweiten Abdeckstruktur-Querseite 26 angeordnet sind. Zweckmäßigerweise umfassen die oberen Kopplungsabschnitte einen Drehriegel 37, der insbesondere an der Abdeckstruktur-Oberseite 21 angeordnet ist.

Die untere Kopplungsschnittstelle 5A umfasst exemplarisch mehrere untere Kopplungsabschnitte, die insbesondere an der ersten Abdeckstruktur-Querseite 25 und/oder der Abdeckstruktur-Oberseite 21 angeordnet sind. Exemplarisch umfassen die unteren Kopplungsabschnitte untere Kopplungsvorsprünge 38, die insbesondere an der ersten Abdeckstruktur-Querseite 25 angeordnet sind und beispielsweise als Standfüße ausgeführt sind. Zweckmäßigerweise umfassen die unteren Kopplungsabschnitte einen vorderen Kopplungsvorsprung 39, der insbesondere an der Abdeckstruktur-Oberseite 21 angeordnet ist.

Die Kopplungsschnittstelle 5 ist zweckmäßigerweise derart ausgeführt, dass sie mit einer identischen Kopplungsschnittstelle koppelbar ist; insbesondere sind die unteren Kopplungsabschnitte 5A der Kopplungsschnittstelle 5 mit oberen Kopplungsabschnitten einer identischen Kopplungsschnittstelle koppelbar. Beispielsweise können die unteren Kopplungsvorsprünge 38 der Kopplungsschnittstelle 5 in Eingriff mit Kopplungsvertiefungen einer identischen Kopplungsschnittstelle gebracht werden und/oder der vordere Kopplungsvorsprung 39 kann in Eingriff mit einem Drehriegel der identischen Kopplungsschnittstelle gebracht werden.

Die Figur 3 zeigt eine Stapelanordnung 40. Die Stapelanordnung 40 ist eine exemplarische Ausgestaltung des vertikalen Stapels. Die Stapelanordnung 40 umfasst die Sägevorrichtung 10 sowie eine untere Systemkiste 30A und/oder eine obere Systemkiste 30B. Die Systemkisten 30A, 30B sind Beispiele der Systemkiste 30; die auf die Systemkiste 30 bezogenen Erläuterungen gelten zweckmäßigerweise jeweils für die obere Systemkiste 30A und/oder die untere Systemkiste 30B.

Die Sägevorrichtung 10 ist auf die untere Systemkiste 30A aufgesetzt und/oder die obere Systemkiste 30B ist auf die Sägevorrichtung 10 aufgesetzt, so dass die Sägevorrichtung 10, die untere Systemkiste 30A und/oder die obere Systemkiste 30B zusammen einen vertikalen Stapel bilden.

Zweckmäßigerweise umfasst die Kopplungsschnittstelle 5 die untere Kopplungsschnittstelle 5A, die eine untere lösbare, vertikal zugfeste Kopplung zu der unteren Systemkiste 30A bereitstellt. Vorzugsweise umfasst die Kopplungsschnittstelle 5 die obere Kopplungsschnittstelle 5B, die eine obere lösbare, vertikal zugfeste Kopplung zu der oberen Systemkiste 30B bereitstellt. Die Sägevorrichtung 10 nimmt in dem vertikalen Stapel die Transportausrichtung ein, in der die Werkstück-Auflage 4 mit ihrer Auflageebene vertikal ausgerichtet ist.

Der vertikale Stapel erstreckt sich in einer vertikalen Stapelrichtung 46 vertikal nach oben. In der Transportausrichtung entspricht die negative x-Richtung der Sägevorrichtung 10 der Stapelrichtung 46. Der vertikale Stapel ist zweckmäßigerweise quaderförmig. Die Grundfläche des vertikalen Stapels ist zweckmäßigerweise gleich den x-z-Abmessungen der Sägevorrichtung 10. Insbesondere weisen die Sägevorrichtung 10 (in der Transportausrichtung) und die untere Systemkiste 30A und/oder die obere Systemkiste 30B jeweils die gleichen horizontalen Abmessungen auf.

Die Systemkiste 30, insbesondere die untere Systemkiste 30A und/oder die obere Systemkiste 30B, umfasst eine Systemkiste-Kopplungsschnittstelle mit einer oberen Systemkiste-Kopplungsschnittstelle, mit der die Systemkiste 30 an die untere Kopplungsschnittstelle 5A ankoppelbar ist, und einer unteren Systemkiste-Kopplungsschnittstelle, mit der die Systemkiste an die obere Kopplungsschnittstelle 5B ankoppelbar ist. Die Systemkiste-Kopplungsschnittstelle ist zweckmäßigerweise in Entsprechung zu der Kopplungsschnittstelle 5 ausgeführt.

Die obere Systemkiste-Kopplungsschnittstelle 5A umfasst exemplarisch mehrere obere Systemkiste-Kopplungsabschnitte, die insbesondere an der Systemkiste-Oberseite 32 und/oder einer Systemkiste-Vorderseite 41 angeordnet sind. Exemplarisch umfassen die oberen Systemkiste-Kopplungsabschnitte Systemkiste-Kopplungsvertiefungen 42, die insbesondere an der Systemkiste-Oberseite 32 angeordnet sind. Zweckmäßigerweise umfassen die oberen Systemkiste-Kopplungsabschnitte einen Systemkiste-Drehriegel 43, der insbesondere an der Systemkiste-Vorderseite 41 angeordnet ist.

Die untere Systemkiste-Kopplungsschnittstelle 5A umfasst exemplarisch mehrere untere Systemkiste-Kopplungsabschnitte, die insbesondere an der Systemkiste-Unterseite 33 und/oder der Systemkiste-Vorderseite 41 angeordnet sind. Exemplarisch umfassen die unteren Systemkiste-Kopplungsabschnitte untere Systemkiste-Kopplungsvorsprünge 44, die insbesondere an der Systemkiste-Unterseite 33 angeordnet sind und beispielsweise als Standfüße ausgeführt sind. Zweckmäßigerweise umfassen die unteren Systemkiste-Kopplungsabschnitte einen vorderen Systemkiste-Kopplungsvorsprung 45, der insbesondere an der Systemkiste-Vorderseite 41 angeordnet ist.

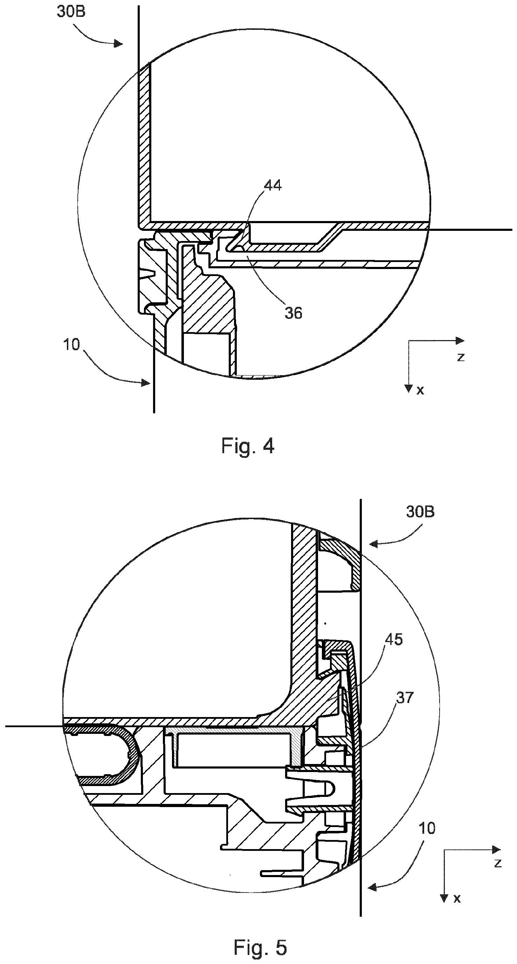

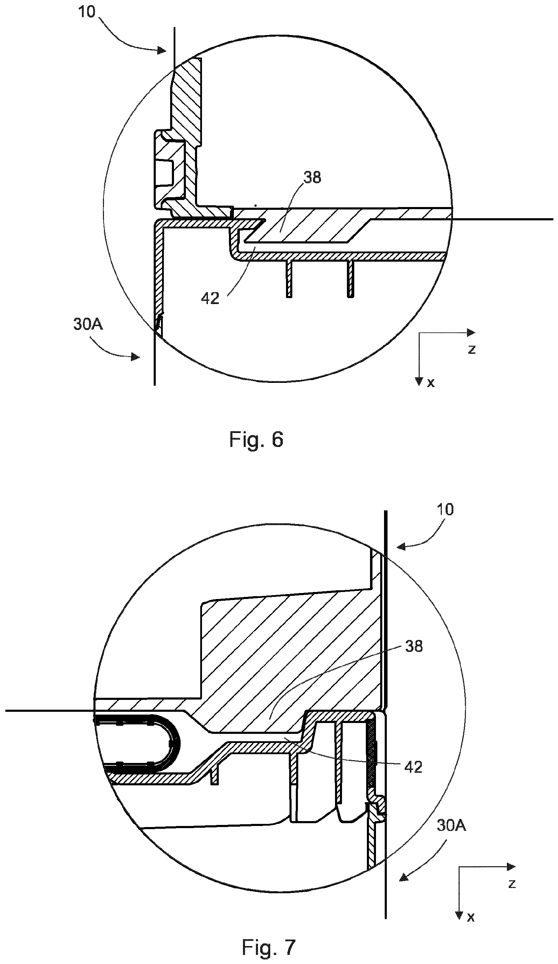

Die Figuren 4 bis 7 zeigen Details der lösbaren, vertikal zugfesten Kopplung. In der Figur 4 ist zu sehen, wie ein unterer Systemkiste-Kopplungsvorsprung 44 der oberen Systemkiste 30B in eine Kopplungsvertiefung 36 der Sägevorrichtung 10 greift. In der Figur 5 ist zu sehen, wie ein vorderer Systemkiste-Kopplungsvorsprung 45 in Eingriff mit einem Drehriegel 37 der Sägevorrichtung 10 steht. In den Figuren 6 und 7 ist zu sehen, wie untere Kopplungsvorsprünge 38 der Sägevorrichtung 10 in Systemkiste-Kopplungsvertiefungungen 42 der unteren Systemkiste 30A greifen.

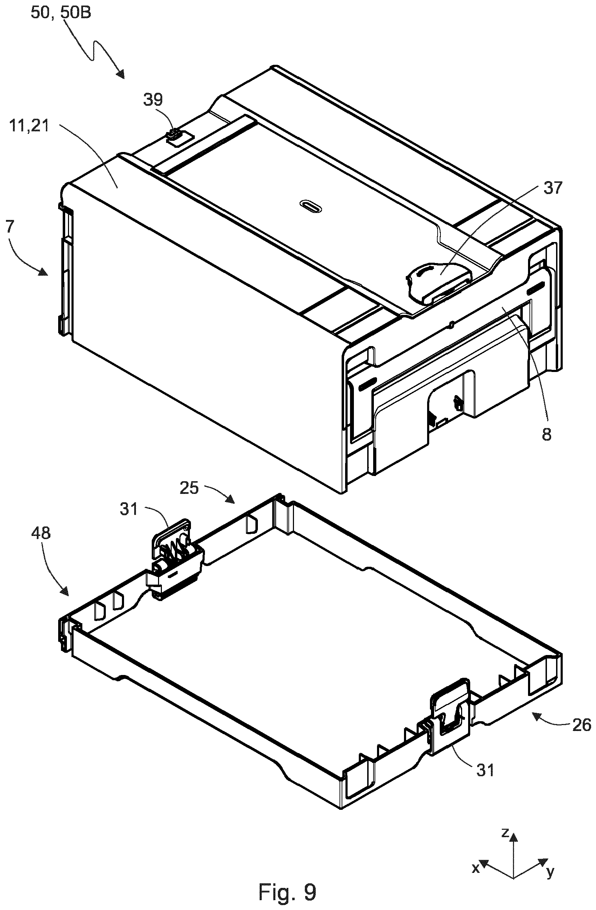

Bevorzugt umfasst die Abdeckstruktur 50 einen Werkstück-Auflageabschnitt 7. Eine exemplarische Ausgestaltung des Werkstück-Auflageabschnitts 7 ist in den Figuren 8 und 9 gezeigt. Die Sägevorrichtung 10 ist in eine Arbeitskonfiguration versetzbar, in der der Werkstück-Auflageabschnitt 7 eine Zusatz-Auflage 11 bereitstellt, die dazu dient, zusammen mit der Werkstück-Auflage 4 eine Gesamt-Werkstück-Auflagefläche bereitzustellen, auf die das Werkstück 6 auflegbar ist, während das Werkstück 6 mit der Sägevorrichtung 10 gesägt wird. Die Gesamt-Werkstück-Auflagefläche ergibt sich als Summe aus der Auflagefläche der Werkstück-Auflage 4 und der Auflagefläche der Zusatz-Auflage 11. Zweckmäßigerweise steht in der Arbeitskonfiguration die Sägeeinheit 20 mit ihrer Unterseite 3 auf der Unterlage 12 und der Werkstück-Auflageabschnitt 7 ist neben der Sägeeinheit 20 angeordnet, so dass die Zusatz-Auflage 11 auf der gleichen Höhe wie die Werkstück-Auflage 4 angeordnet ist. Vorzugsweise ist der vertikale Abstand von der Unterseite 3 zu der Auflageebene der Werkstück-Auflage 4 gleich dem vertikalen Abstand einer Unterseite des Werkstück-Auflageabschnitts 7 (mit welcher Unterseite der Werkstück-Auflageabschnitt auf die Unterlage 12 abstellbar ist) zu einer Auflageebene der Zusatz-Auflage 11. Zweckmäßigerweise weist der Werkstück-Auflageabschnitt 7 eine Höhe auf, die identisch mit dem Abstand der Werkstück-Auflage 4 von der Unterseite 3 - also der Aufstandsfläche - der Sägevorrichtung ist. Durch den Werkstück-Auflageabschnitt 7 ergibt sich insgesamt eine größere Fläche - nämlich die Gesamt-Werkstück-Auflagefläche - zur Auflage des Werkstücks 6 beim Sägen des Werkstücks 6 mit dem Sägeblatt 1.

Exemplarisch ist der Werkstück-Auflageabschnitt 7 in der Arbeitskonfiguration in y-Richtung neben der Sägeeinheit 20 angeordnet. Ebenso ist es denkbar, dass der Werkstück-Auflageabschnitt 7 in der Arbeitskonfiguration in x-Richtung neben der Sägeeinheit 20 angeordnet ist. Zweckmäßigerweise steht der Werkstück-Auflageabschnitt 7 auf der Unterlage 12. Die Unterlage ist insbesondere eben ausgeführt. Exemplarisch ist der Werkstück-Auflageabschnitt 7 ein haubenförmiger Abschnitt der Abdeckstruktur 50. Alternativ kann die gesamte Abdeckstruktur als der Werkstück-Auflageabschnitt 7 dienen. Vorzugsweise stellt die Abdeckstruktur-Oberseite 21 die Zusatz-Auflage 11 bereit. Die Zusatz-Auflage 11 ist insbesondere eine Zusatz-Auflagefläche. Das Werkstück 6 ist gleichzeitig auf die Werkstück-Auflage 4 und die Zusatz-Auflage 11, insbesondere flächig, auflegbar, während es mit dem Sägeblatt 1 gesägt wird.

Optional verfügt die Sägeeinheit 20 über einen Parallelanschlag 47, der in der Figur 8 exemplarisch auf der Werkstück-Auflage 4 angeordnet ist und von dieser abgenommen werden kann, damit ein Werkstück derart auf der Werkstück-Auflage 4 platziert werden kann, dass es gleichzeitig auch auf der Zusatz-Auflage 11 aufliegt.

Die Abdeckstruktur 50 ist bevorzugt mehrteilig ausgeführt. Der Werkstück-Auflageabschnitt 7 ist von der übrigen Abdeckstruktur abnehmbar, um die Arbeitskonfiguration bereitzustellen. Die Figur 9 zeigt eine exemplarische Ausgestaltung der Abdeckstruktur 50, bei der die Abdeckstrukur 50 den (exemplarisch haubenförmigen) Werkstück-Auflageabschnitt 7 und ein Abdeckstruktur-Unterteil 48 umfasst. Das Abdeckstruktur-Unterteil 48 bildet exemplarisch die vorstehend genannte übrige Abdeckstruktur.

Die Abdeckstruktur 50 mit dem Werkstück-Auflageabschnitt 7 und dem Abdeckstruktur-Unterteil 48 soll auch als Abdeckstruktur 50B gemäß einer zweiten Variante bezeichnet werden.

Die Abdeckstruktur 50 ist exemplarisch quaderförmig ausgeführt; vorzugsweise sind sämtliche Seiten der Abdeckstruktur 50 geschlossen, insbesondere in einem Zustand, in dem das Abdeckstruktur-Unterteil 48 an dem Werkstück-Auflageabschnitt 7 angebracht ist. Die (insbesondere) quaderförmige Abdeckstruktur 50 wird exemplarisch durch eine gedachte horizontale Teilungsebene - also eine in der x-y-Ebene liegende Teilungsebene - in den Werkstück-Auflageabschnitt 7 und das Abdeckstruktur-Unterteil 48 unterteilt. Die gedachte horizontale Teilungsebene verläuft zweckmäßigerweise parallel zur Unterseite 3 - also insbesondere parallel zur Aufstandsfläche - der Sägevorrichtung 10. Die gedachte horizontale Teilungsebene verläuft insbesondere durch die untere Hälfte der z-Erstreckung der Abdeckstruktur 50. Zweckmäßigerweise beträgt die z-Erstreckung des Abdeckstruktur-Unterteils 48 maximal ein Drittel der z-Erstreckung des Werkstück-Auflageabschnitt 7. Bevorzugt umfasst die Abdeckstruktur 50 Abdeckstruktur-Befestigungselemente 31, die insbesondere einen oder mehrere exemplarisch an dem Abdeckstruktur-Unterteil 48 angeordnete Befestigungsriegel umfassen. Die Abdeckstruktur-Befestigungselemente 31 sind exemplarisch an den Abdeckstruktur-Querseiten 25, 26 angeordnet.

Optional ist der Werkstück-Auflageabschnitt 7 mit der Sägevorrichtung 10 und/oder der Unterlage 12, beispielsweise einer Werkbank, verbindbar, insbesondere daran befestigbar, zweckmäßigerweise derart, dass der Werkstück-Auflageabschnitt 7 relativ zur Sägeeinheit 20 fixiert ist und dadurch nicht verrutschen kann. Beispielsweise weist die Unterlage 12, insbesondere die Werkbank, Ausnehmungen auf, in die die Sägeeinheit 20 (insbesondere mit ihren Standfüßen) und/oder der Werkstück-Auflageabschnitt 7 greifen kann. Beispielsweise weist die Unterlage 12 eine Lochstruktur, insbesondere eine Sacklochstruktur auf, die die Ausnehmungen bereitstellt. Beispielsweise weist der Werkstück-Auflageabschnitt 7 Eingriffsstrukturen auf, um in die Ausnehmungen der Unterlage 12 zu greifen. Die Eingriffsstrukturen sind beispielsweise Standfüße, die insbesondere identisch zu den Standfüßen der Sägeeinheit 20 sind. Optional kann der Werkstück-Auflageabschnitt 7 einen oder mehrere Haken aufweisen, mit denen er in die Werkstück-Auflage 4 eingehängt werden kann. Optional umfasst die Sägevorrichtung 10 eine Spannvorrichtung, mit der der Werkstück-Auflageabschnitt 7 an der Sägeeinheit 20 befestigt werden kann.

Die Sägevorrichtung 10 kann insbesondere mit einem Verfahren betrieben werden, das den Schritt umfasst: Herstellen der lösbaren, vertikal zugfesten Kopplung zwischen der Sägevorrichtung 10 und der wenigstens einen Systemkiste 30, so dass die Sägevorrichtung 10 und die wenigstens eine Systemkiste 30 den vertikalen Stapel bilden, derart, dass die Sägevorrichtung 10 in dem vertikalen Stapel die Transportausrichtung einnimmt, in der die Werkstück-Auflage 4 mit ihrer Auflageebene vertikal ausgerichtet ist.

Beispielsweise befindet sich die Sägevorrichtung 10 zunächst in der Arbeitskonfiguration und der Arbeitsausrichtung. Die Sägeeinheit 20 steht zweckmäßigerweise mit der Unterseite 3 auf einer insbesondere horizontal ausgerichteten Unterlage. Die Werkstück-Auflage 4 ist mit ihrer Auflageebene horizontal ausgerichtet. Die Abdeckstruktur 50 ist zweckmäßigerweise vollständig von der Sägeeinheit 20 abgenommen. Exemplarisch wird in der Arbeitskonfiguration ein Säge-Schritt durchgeführt, bei dem das Werkstück 6 mit dem Sägeblatt 1 gesägt wird. Der Säge-Schritt wird dann beendet. Zweckmäßigerweise wird die Abdeckstruktur 50 über die Sägeeinheit 20 gestülpt (insbesondere von einem Anwender) und zweckmäßigerweise an der Sägeeinheit 20 befestigt (insbesondere von einem Anwender), um die Sägevorrichtung 10 in die Transportkonfiguration zu versetzen. Die Sägevorrichtung 10 wird dann (insbesondere von dem Anwender) angehoben und um 90 Grad um eine horizontale Achse rotiert, so dass die Sägevorrichtung die Transportausrichtung einnimmt. In der Transportausrichtung sind die erste Abdeckstruktur-Querseite 25 und die zweite Abdeckstruktur-Querseite 26 horizontal ausgerichtet und die Werkstück-Auflage 4 ist mit ihrer Auflageebene vertikal ausgerichtet. Die Sägevorrichtung 10 wird dann mit ihrer ersten Abdeckstruktur-Querseite 25 auf die untere Systemkiste 30A aufgesetzt und mit der untere Kopplungsschnittstelle 5A an der unteren Systemkiste 30A befestigt. Vorzugsweise wird dann die obere Systemkiste 30B auf die zweite Abdeckstruktur-Querseite 26 aufgesetzt und an der oberen Kopplungsschnittstelle 5B befestigt.

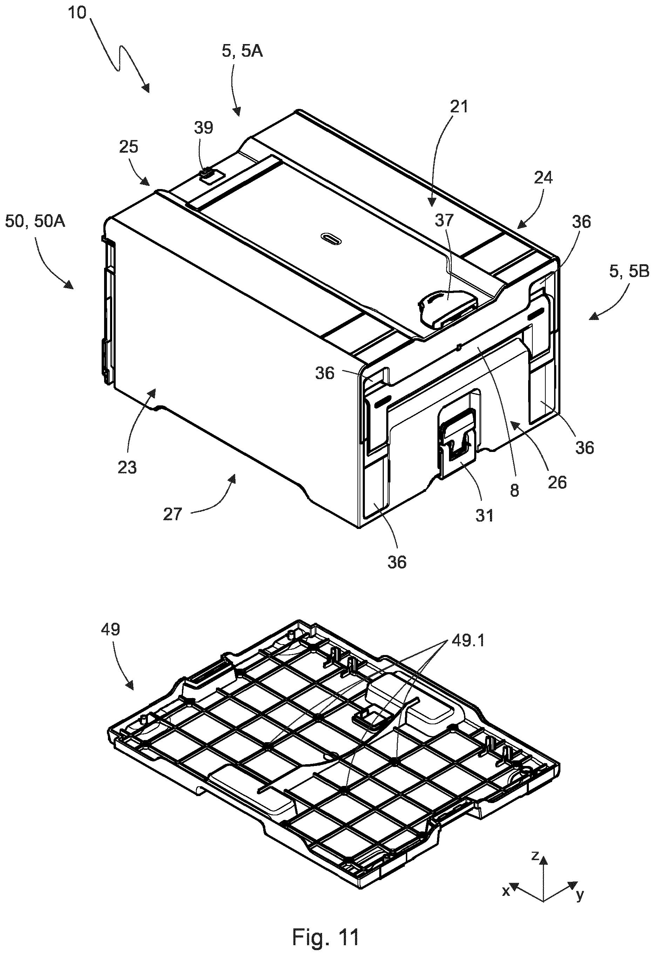

Im Folgenden soll unter Bezugnahme auf die Figur 11 auf eine Abdeckanordnung 70 eingegangen werden.

Die Abdeckanordnung 70 umfasst eine als Schutzhaube ausgeführte Abdeckstruktur 50 zur Aufnahme eines Elektrowerkzeugs, insbesondere einer Tischkreissäge oder einer Kappsäge. Bei dem Elektrowerkzeug kann es sich um die Sägeeinheit 20 handeln oder um ein von einer Sägevorrichtung verschiedenes Elektrowerkzeug - also insbesondere auch um keine Sägevorrichtung. Das Elektrowerkzeug ist insbesondere eine halbstationäre Maschine. Zweckmäßigerweise ist die Schutzhaube wie die vorstehend erläuterte Abdeckstruktur 50A gemäß der ersten Variante ausgeführt, so dass die diesbezüglichen vorstehenden Erläuterungen für die Schutzhaube gelten. Insbesondere ist die Schutzhaube quaderförmig ausgeführt, wobei zweckmäßigerweise die Abdeckstruktur-Unterseite 27 offen ausgeführt ist und vorzugsweise die anderen Seiten 21, 23, 24, 25, 26 geschlossene Seiten sind. Exemplarisch weist die Schutzhaube den an der zweiten Abdeckstruktur-Querseite 26 angeordneten Tragegriff 8 auf.

Die Schutzhaube weist die Kopplungsschnittstelle 5 auf. Die Kopplungsschnittstelle 5 ist insbesondere wie vorstehend erläutert ausgeführt. Mit der Kopplungsschnittstelle 5 ist eine lösbare, vertikal zugfeste Kopplung zu einer oder zu mehreren Systemkisten 30 herstellbar, so dass die Abdeckanordnung 70 in einer Transportkonfiguration, in der die Schutzhaube das Elektro-Werkzeug aufnimmt, zusammen mit der einen oder den mehreren Systemkisten 30 einen vertikalen Stapel bilden kann.

Bevorzugt umfasst die Kopplungsschnittstelle 5 die untere Kopplungsschnittstelle 5A, mit der in einem Zustand, in dem die Schutzhaube auf die untere Systemkiste 30A aufgesetzt ist, eine untere lösbare, vertikal zugfeste Kopplung zu der unteren Systemkiste 30A herstellbar ist. Zweckmäßigerweise umfasst die Kopplungsschnittstelle 5 die obere Kopplungsschnittstelle 5B, mit der in einem Zustand, in dem die obere Systemkiste 30B auf die Schutzhaube aufgesetzt ist, eine obere lösbare, vertikal zugfeste Kopplung zu der oberen Systemkiste 30B herstellbar ist.

Bevorzugt umfasst die Abdeckanordnung 70 ein Bodenelement 49, das an die Abdeckstruktur 50 anbringbar ist, um die offene Abdeckstruktur-Unterseite 27 zu verschließen. In einem Zustand, in dem das Bodenelement 49 an der Abdeckstruktur 50 angebracht ist, ist die Abdeckanordnung 70 zweckmäßigerweise quaderförmig, wobei insbesondere sämtliche Seiten der Abdeckanordnung 70 geschlossen sind. Exemplarisch dienen die insbesondere als Befestigungsriegel ausgeführten Abdeckstruktur-Befestigungselemente 31 der Abdeckstruktur 50 dazu, das Bodenelement 49 an der Abdeckstruktur 50 anzubringen. Das Bodenelement 49 ist insbesondere als Bodenplatte ausgeführt. Vorzugsweise bilden das Bodenelement 49 und die Schutzhaube zusammen eine Systemkiste, insbesondere eine nach außen geschlossene Systemkiste, wenn das Bodenelement 49 an der Schutzhaube befestigt ist.

Bevorzugt umfasst die Schutzhaube an einer Stirnfläche Ausnehmungen - insbesondere die Kopplungsvertiefungen 36 - für eine formschlüssige Verbindung mit einer darauf abstellbaren Systemkiste 30, die mit ihrem Systemkiste-Drehriegel 43 lösbar an der Schutzhaube gesichert werden kann. Die Stirnfläche ist die zweite Abdeckstruktur-Querseite 26 und weist in einem Zustand, in dem die Schutzhaube im vertikalen Stapel untergebracht ist, nach oben - ist also horizontal ausgerichtet.

Zweckmäßigerweise weist die Schutzhaube weitere, insbesondere außen angeordnete, Kopplungselemente - beispielsweise die Abdeckstruktur-Befestigungselemente 31 - zur Kopplung, insbesondere zur lösbaren Befestigung, eines die Schutzhabe verschließenden Elements und/oder der Bodenplatte des Elektrowerkzeugs auf. Diese Kopplungselemente können auch als primäre Kopplungselemente bezeichnet werden und sind insbesondere von außerhalb der Schutzhaube bedienbar.

Vorzugsweise weist die Schutzhaube innen angeordnete Kopplungselemente - beispielsweise die innere Kopplungsstruktur 9 - auf, insbesondere einen oder mehrere Haken, zur lösbaren Verbindung des Elektrowerkzeugs mit der Schutzhaube, insbesondere in der Transportausrichtung der Schutzhaube. In der Transportausrichtung sind die Abdeckstruktur-Querseiten 25, 26 horizontal - also senkrecht zur Vertikalen - ausgerichtet. Diese Kopplungselemente können auch als sekundäre Kopplungselemente bezeichnet werden und dienen der Verbesserung der Kraftaufnahme beim Transport und/oder Tragen der Schutzhaube, so dass die Gewichtskraft des in der Schutzhaube transportierten Elektrowerkzeugs nicht nur über die primären Kopplungselemente, sondern gleichzeitig auch von den sekundären Kopplungsmitteln zur Schutzhaube, insbesondere zum Tragegriff 8, abgeleitet wird.

Optional bildet eine Unterseite und/oder Aufstandsfläche des Elektrowerkzeugs die Bodenplatte der Abdeckanordnung 70, wenn das Elektrowerkzeug in der Schutzhaube aufgenommen ist.

Zweckmäßigerweise wird eine Transportanordnung 60 bereitgestellt, umfassend die Abdeckanordnung 70 sowie das in der Schutzhaube aufgenommene Elektrowerkzeug. Die Transportanordnung 60 verfügt über die Kopplungsabschnitte zur Herstellung der lösbaren, vertikal zugfesten Kopplung, insbesondere der unteren lösbaren, vertikal zugfesten Kopplung und/oder der oberen lösbaren, vertikal zugfesten Kopplung. Die Kopplungsabschnitte sind insbesondere wie die vorstehend erläuterten Kopplungsabschnitte ausgebildet. Die Kopplungsabschnitte sind Teil der Kopplungsschnittstelle 5. Vorzugsweise sind sämtliche Kopplungsabschnitte Teil der Schutzhaube und nicht Teil des Elektrowerkzeugs.

Bevorzugt weist die Abdeckanordnung 70 das Bodenelement 49 auf, das insbesondere nicht Teil des Elektrowerkzeugs ist. Vorzugsweise ist das Elektrowerkzeug mittels Spann- oder Schraubelementen mit dem Bodenelement, insbesondere lösbar, verbunden. Das Elektrowerkzeug ist beispielsweise mit seiner Standfläche an der Bodenplatte oder dem Bodenelement 49 festgeklemmt, verspannt oder verschraubt. Optional ist das Elektrowerkzeug ein handgeführtes Werkzeug, beispielsweise ein Langhalsschleifer, und ist zweckmäßigerweise an der Bodenplatte festgeklemmt und/oder verspannt.

Optional verfügt das insbesondere als Bodenplatte ausgeführte Bodenelement 49 über einen Werkzeug-Aufnahmebereich, der flexibel an ein zu befestigendes Elektrowerkzeug anpassbar ist. Beispielsweise umfasst der Werkzeug-Aufnahmebereich eine Vielzahl von Ausnehmungen 49.1, in die Befestigungselemente für das zu befestigende Elektrowerkzeuge eingebracht und gesichert (beispielsweise über Schrauben und/oder Formschluss) sind. Zweckmäßigerweise können die Befestigungselemente in verschiedenen Ausnehmungen angeordnet werden, um den Werkzeug-Aufnahmebereich an das jeweils zu befestigende Werkzeug anzupassen.

Die Figur 3 zeigt eine Stapelanordnung 40, umfassend die Transportanordnung 60, sowie die untere Systemkiste 30A und die obere Systemkiste 30B. Die Transportanordnung 60 ist auf die untere Systemkiste 30A aufgesetzt und die obere Systemkiste 30B ist auf die Transportanordnung 60 aufgesetzt, so dass die Transportanordnung 60, die untere Systemkiste 30A und die obere Systemkiste 30B zusammen einen vertikalen Stapel bilden. Die Kopplungsschnittstelle 5 umfasst die untere Kopplungsschnittstelle 5A, die eine untere lösbare, vertikal zugfeste Kopplung zu der unteren Systemkiste 30A bereitstellt, und die obere Kopplungsschnittstelle 5A, die eine obere lösbare, vertikal zugfeste Kopplung zu der oberen Systemkiste 30B bereitstellt.

In dem vertikalen Stapel ist die Abdeckstruktur 50 zweckmäßigerweise mit ihrer Abdeckstruktur-Unterseite 27 vertikal ausgerichtet. Insbesondere ist die erste Abdeckstruktur-Querseite 25 und die zweite Abdeckstruktur-Querseite 26 horizontal ausgerichtet, also insbesondere senkrecht zur Stapelrichtung 46. Beispielsweise liegt die erste Abdeckstruktur-Querseite 25 auf der Systemkiste-Oberseite der unteren Systemkiste 30A auf und auf der zweiten Abdeckstruktur-Querseite 26 liegt die Systemkiste-Unterseite der oberen Systemkiste 30B auf.

## Patentansprüche

1. Sägevorrichtung (10), insbesondere Tischkreissäge oder Kappsäge, umfassend eine Sägeeinheit (20) mit einem Sägeblatt (1) und einer Stützstruktur (2), die mit ihrer Unterseite (3) auf einer Unterlage abstellbar ist und über eine Werkstück-Auflage (4) verfügt, auf der ein Werkstück (6) auflegbar ist, während es mit der Sägevorrichtung (10) gesägt wird, wobei die Sägevorrichtung (10) über eine Kopplungsschnittstelle (5) verfügt, über die eine lösbare, vertikal zugfeste Kopplung mit wenigstens einer Systemkiste (30) herstellbar ist, um zusammen mit der wenigstens einen Systemkiste (30) einen vertikalen Stapel zu bilden, derart, dass die Sägevorrichtung (10) in dem vertikalen Stapel eine Transportausrichtung einnimmt, in der die Werkstück-Auflage (4) mit ihrer Auflageebene vertikal ausgerichtet ist.

2. Sägevorrichtung (10) nach Anspruch 1, ferner umfassend eine Abdeckstruktur (50), die an die Sägeeinheit (20) anbringbar ist, um die Sägevorrichtung (10) in eine Transportkonfiguration zu versetzen, in der die Sägevorrichtung (10) mit der Kopplungsschnittstelle (5) an die wenigstens eine Systemkiste (30) koppelbar ist, um zusammen mit der wenigstens einen Systemkiste (30) den vertikalen Stapel zu bilden.

3. Sägevorrichtung (10) nach Anspruch 2, wobei die Abdeckstruktur (50) die Kopplungsschnittstelle (5) umfasst.

4. Sägevorrichtung (10) nach Anspruch 2 oder 3, wobei die Abdeckstruktur (50) in der Transportkonfiguration einen gegenüber der Umgebung der Sägevorrichtung (10) insbesondere staubdicht verschlossenen Innenraum (28) begrenzt, in dem das Sägeblatt (1) und/oder die Werkstück-Auflage (4) angeordnet ist.

5. Sägevorrichtung (10) nach einem der Ansprüche 2 bis 4, wobei die Abdeckstruktur (50) eine Abdeckhaube umfasst.

6. Sägevorrichtung (10) nach einem der Ansprüche 2 bis 5, wobei die Sägevorrichtung (10) in der Transportkonfiguration ein quaderförmiges Außengehäuse aufweist, das teilweise oder vollständig von der Abdeckstruktur (50) gebildet wird, wobei vorzugsweise in der Transportkonfiguration eine Seite des quaderförmigen Außengehäuses von der Unterseite (3) der Stützstruktur (2) gebildet wird und vorzugsweise sämtliche weitere Seiten des Außengehäuses von der Abdeckstruktur (50) gebildet werden.

7. Sägevorrichtung (10) nach einem der Ansprüche 2 bis 6, wobei die Abdeckstruktur (50) einen Werkstück-Auflageabschnitt (7) umfasst und die Sägevorrichtung (10) in eine Arbeitskonfiguration versetzbar ist, in der der Werkstück-Auflageabschnitt (7) eine Zusatz-Auflage (11) bereitstellt, die dazu dient, zusammen mit der Werkstück-Auflage (4) eine Gesamt-Werkstück-Auflagefläche bereitzustellen, auf die das Werkstück (6), insbesondere flächig, auflegbar ist, während das Werkstück (6) mit der Sägevorrichtung (10) gesägt wird, wobei in der Arbeitskonfiguration die Sägeeinheit (20) mit ihrer Unterseite (3) vorzugsweise auf der Unterlage (12) steht und der Werkstück-Auflageabschnitt (7) vorzugsweise neben der Sägeeinheit (20) angeordnet ist, so dass vorzugsweise die Zusatz-Auflage (11) auf der gleichen Höhe wie die Werkstück-Auflage (4) angeordnet ist und/oder wobei die Abdeckstruktur (50) vorzugweise mehrteilig ausgeführt ist und der Werkstück-Auflageabschnitt vorzugsweise von der übrigen Abdeckstruktur abnehmbar ist, um die Arbeitskonfiguration bereitzustellen.

8. Sägevorrichtung (10) nach einem der Ansprüche 2 bis 7, wobei die Abdeckstruktur (50) eine innere Kopplungsstruktur (9) aufweist, über die die Sägeeinheit (20) an der Abdeckstruktur (50) aufgehängt ist, wenn sich die Sägevorrichtung (10) in der Transportausrichtung befindet, wobei die Abdeckstruktur (50) vorzugsweise einen Tragegriff (8) aufweist, der vorzugsweise im Bereich der inneren Kopplungsstruktur (9) außen an der Abdeckstruktur (50) angeordnet ist.

9. Stapelanordnung (40), umfassend eine Sägevorrichtung (10) nach einem der Ansprüche 1 bis 8, sowie eine untere Systemkiste (30A) und/oder eine obere Systemkiste (30B), wobei die Sägevorrichtung (10) auf die untere Systemkiste (30A) aufgesetzt ist und/oder die obere Systemkiste (30B) auf die Sägevorrichtung (10) aufgesetzt ist, so dass die Sägevorrichtung (10), die untere Systemkiste (30A) und/oder die obere Systemkiste (30B) zusammen einen vertikalen Stapel bilden, und wobei die Kopplungsschnittstelle (5) eine untere Kopplungsschnittstelle (5A) umfasst, die eine untere lösbare, vertikal zugfeste Kopplung zu der unteren Systemkiste (30A) bereitstellt, und/oder eine obere Kopplungsschnittstelle (5B) umfasst, die eine obere lösbare, vertikal zugfeste Kopplung zu der oberen Systemkiste (30B) bereitstellt, wobei die Sägevorrichtung (10) in dem vertikalen Stapel die Transportausrichtung einnimmt, in der die Werkstück-Auflage (4) mit ihrer Auflageebene vertikal ausgerichtet ist.

10. Verfahren zum Betreiben der Sägevorrichtung (10) nach einem der Ansprüche 1 bis 9, umfassend den Schritt:
Herstellen der lösbaren, vertikal zugfesten Kopplung zwischen der Sägevorrichtung (10) und der wenigstens einen Systemkiste (30), so dass die Sägevorrichtung (10) und die wenigstens eine Systemkiste (30) den vertikalen Stapel bilden, derart, dass die Sägevorrichtung (10) in dem vertikalen Stapel die Transportausrichtung einnimmt, in der die Werkstück-Auflage (4) mit ihrer Auflageebene vertikal ausgerichtet ist.

11. Abdeckanordnung (70) mit einer als Schutzhaube ausgeführten Abdeckstruktur (50) zur Aufnahme eines Elektrowerkzeugs, insbesondere einer Tischkreissäge oder einer Kappsäge, wobei die Schutzhaube eine Kopplungsschnittstelle (5) aufweist, mit der eine lösbare, vertikal zugfeste Kopplung zu einer oder mehreren Systemkisten (30) herstellbar ist, so dass die Abdeckanordnung (70) in einer Transportkonfiguration, in der die Schutzhaube das Elektro-Werkzeug aufnimmt, zusammen mit der einen oder den mehreren Systemkisten (30) einen vertikalen Stapel bilden kann.

12. Abdeckanordnung (70) nach Anspruch 11, wobei die Kopplungsschnittstelle (5) eine untere Kopplungsschnittstelle (5A) umfasst, mit der in einem Zustand, in dem die Schutzhaube auf eine untere Systemkiste (30A) aufgesetzt ist, eine untere lösbare, vertikal zugfeste Kopplung zu der unteren Systemkiste (30A) herstellbar ist, und/oder eine obere Kopplungsschnittstelle (5B) umfasst, mit der in einem Zustand, in dem eine obere Systemkiste (30B) auf die Schutzhaube aufgesetzt ist, eine obere lösbare, vertikal zugfeste Kopplung zu der oberen Systemkiste (30B) herstellbar ist.

13. Transportanordnung (60), umfassend die Abdeckanordnung (70) nach Anspruch 11 oder 12 sowie das in der Schutzhaube aufgenommene Elektrowerkzeug, wobei die Transportanordnung (60) über Kopplungsabschnitte zur Herstellung der lösbaren, vertikal zugfesten Kopplung, insbesondere einer/der unteren lösbaren, vertikal zugfesten Kopplung und/oder einer/der oberen lösbaren, vertikal zugfesten Kopplung verfügt, die Teil der Kopplungsschnittstelle (5) sind, wobei sämtliche Kopplungsabschnitte Teil der Schutzhaube und nicht Teil des Elektrowerkzeugs sind.

14. Stapelanordnung (40), umfassend eine Transportanordnung (60) nach Anspruch 13, sowie eine untere Systemkiste (30A) und eine obere Systemkiste (30B), wobei die Transportanordnung (60) auf die untere Systemkiste (30A) aufgesetzt ist und die obere Systemkiste (30B) auf die Transportanordnung (60) aufgesetzt ist, so dass die Transportanordnung (60), die untere Systemkiste (30A) und die obere Systemkiste (30B) zusammen einen vertikalen Stapel bilden, und wobei die Kopplungsschnittstelle (5) eine untere Kopplungsschnittstelle (5A) umfasst, die eine untere lösbare, vertikal zugfeste Kopplung zu der unteren Systemkiste (30A) bereitstellt, und eine obere Kopplungsschnittstelle (5A) umfasst, die eine obere lösbare, vertikal zugfeste Kopplung zu der oberen Systemkiste (30B) bereitstellt.

15. Verfahren zum Betreiben der Abdeckanordnung (70) nach Anspruch 11 oder 12, oder der Transportanordnung (60) nach Anspruch 13, umfassend den Schritt: Herstellen der lösbaren, vertikal zugfesten Kopplung der Schutzhaube mit der wenigstens einen Systemkiste (30), um den vertikalen Stapel zu bilden.
